# EUROPÄISCHE PATENTANMELDUNG

(11) **EP 0 884 729 A2**
(43) Veröffentlichungstag der Anmeldung: **16.12.1998**
(21) Anmeldenummer: 98109177.0
(22) Anmeldetag: 20.05.1998
(51) Int. Cl.: G11B 27/11, G11B 19/12, G06F 1/00, G11B 20/00, G11B 23/04, G11B 23/087, G11B 27/10

(54) **Datenträgerzugriffssteuerung**

(30) Priorität: 12.06.1997 DE 19724872
(71) Anmelder: International Business Machines Corporation, Armonk, N.Y. 10504 (US)
(72) Erfinder: Saalmüller, Jürgen, Dr., 71034 Böblingen (DE)
(74) Vertreter: Rach, Werner, Dr.

(57) **Zusammenfassung**

Bei dem Datenträger ist ein zusätzlicher programmierbarer Informationsträger, z.B. ein Chip, ein Hologramm oder ein Magnetstreifen, vorgesehen, der lösbar oder fest, extern zugänglich am Schutzmantel, z.B. am Kassetten- oder Diskettengehäuse, des Speichermediums angeordnet ist. Die Kopplung des Chips mit der Außenwelt, z.B. mit einer extern vorgesehenen Kontrolleinheit, erfolgt über eine entsprechende elektrische Kontaktierung oder über einen kontaktloses Transponder-Mechanismus. Bei einem Zugriff auf die auf dem Datenträger gespeicherten Nutzdaten werden auf dem zusätzlichen Informationsträger gespeicherte zweite Informationen herangezogen, um beispielsweise Zugriffsrechte bezüglich der ersten Informationen, oder mechanische oder elektrische Eigenschaften des Datenträgers selbst, zu berücksichtigen.

Hierdurch kann die aktuelle Position eines sequentiellen Speichermediums zu jedem Zeitpunkt exakt festgehalten werden, ohne daß eine wiederholte Kalibrierung, beispielsweise durch Suchlauf zum Bandanfang oder Bandende, erforderlich ist. Auch kann der aktuelle Inhalt eines Datenträgers in der Weise gespeichert werden, daß bei Überschreiben von Informationen auf dem seqientiellen Medium ein Fortschreiben (Update) der neuen Organisation der Information im Chip erfolgt. Damit können nunmehr auch sequentiell organisierte Speichermedien fragmental betrieben werden. Insbesondere wird ein einfaches und schnelles Auffinden einer gewünschten Information auf dem sequentiellen Medium, d.h. einen Direktzugriff (Random Access), ermöglicht. Darüber hinaus lassen sich sogenannte "Hardware Keys" zum Schutz eines bestimmten Anwendungsprogramms, z.B. über einen "Dongle" oder "Dangle", einfacher realisieren. Schließlich können im Chip vorgesehene spezielle Funktionseinheiten Veränderungen an den Nutzdaten in Realzeit vornehmen.

## Beschreibung

Die Erfindung betrifft ein Verfahren und eine Vorrichtung zur Steuerung von Zugriffsmechanismen im gesamten Bereich von Speichermedien, bei denen Informationen auf einem Datenträger gespeichert werden. Insbesondere bezieht sich die Erfindung auf sequentiell organisierte wiederbeschreibbare Speichermedien, beispielsweise magnetische Bandspeicher im Audio- oder Videobereich oder Bandstreamer im Bereich der elektronischen Datenverarbeitung, sowie wiederbeschreibbare oder festspeichernde Direktzugriffsspeicher wie Disketten (Floppy-Disks), Bildplatten, CD-ROM, oder Opto-Chipkarten.

Ein in vielen technologischen Bereichen, auch im Bereich der Konsumentenelektronik, verbreitetes Speichermedium stellen sequentielle magnetische und optische Speicher wie z.B. Audio- und Videokassetten, Streamerkassetten, Magnetbänder, oder Disketten dar. Ein sequentielles Speichermedium zeichnet sich insbesondere dadurch aus, daß Datensätze in analoger oder digitaler Form sequentiell auf dem jeweiligen Datenträger abgelegt werden. Diesen Datenträgern ist somit gemeinsam, daß die Aufzeichnung und Wiedergabe der gespeicherten Informationen in einer Form erfolgt, bei der ein in sich konsistenter Datensatz, beispielsweise ein Videofilm, ohne Unterbrechung gespeichert wird.

Nun erlauben sequentielle Speichermedien mit digitalem Inhalt bereits eine Organisation des Inhaltes in Form eines Verzeichnisses, das an einer definierten Position des Aufzeichungsmediums eingerichtet ist. Beispielsweise kann an einem Verzeichnis für logische Informationsblöcke im Zusammenhang mit der Position auf dem sequentiellen Medium, beispielsweise basierend auf einer vom Bandanfang gerechneten Windungszahl, gedacht sein. Als Informationsblöcke kommen dabei abgeschlossene Datensätze wie Dateien, Filme, oder Musikstücke, in Betracht. Die Daten eines logischen Informationsblockes auf dem sequentiellen Medium stellen somit die eigentlichen 'Nutzdaten' dar.

Des weiteren bieten Video-Bandsysteme bereits die Möglichkeit, Index-Marken an bestimmten Stellen des Bandes zu setzen, z.B. am Beginn einer jeweils neuen Filmsequenz, die in der Folge ein Auffinden der Positionen bei der Wiedergabe erleichtern. Jedoch treten auch dort die inherenten Schwächen des sequentiellen Speichermediums, wie z.B. lange Umspulzeiten (kein Direktzugriff!) oder ungenügende Datensicherheit wegen des Fehlens eines Überschreibschutzes, zutage. Auch ermöglichen sequentielle Aufzeichungen nicht die Erstellung eines Inhaltsverzeichnisses oder das Überspringen definierter Bereiche (Skip) bzw. fragmentierter Aufzeichnungsbereiche. Darüber hinaus gehen nach Entnahme des Mediums aus dem Abspielgerät jegliche Informationen über die aktuelle Bandposition und die Inhalte des Bandes verloren. Zudem sind Zugriffsmechanismen auf diesen Datenträgern gar nicht oder nur äußerst rudimentär realisiert.

Einen ersten Lösungsansatz zu diesem Probkemkreis stellt die in dem US-Patent 3,851,116, Inhaberin IBM Corporation, New York, "Automatic Magnetic Tape Information Retrieval System with Speed and Position Tape Drive Control" beschriebene Vorrichtung zum Wiederauffinden von Informationen auf einem magnetischen Bandspeicher dar. Ein Direktzugriff wird dort ermöglicht durch eine zusätzliche Steuerspur und eine entsprechende Steuerelektronik, die entsprechende Pulse auf dieser Spur auswertet, um die Geschwindigkeit und die aktuelle Position des Bandantriebs derart zu regeln, daß ausgewählte Informationen auf dem Band lokalisiert werden können. Spezielle Signale an bestimmten Positionen der eigentlichen Informationsspuren erlauben zudem eine Feinabstimmung des Antriebmotors, um die Position der gesuchten Informationen möglichst exakt anfahren zu können.

Ein weiterer Lösungsansatz, nämlich eine für die Anbringung auf Datenkassetten geeignete, für Mensch und Maschine lesbare, Kennzeichnung ist bereits in den beiden US-Patenten 5,484,055 und 5,581,073, Inhaberin IBM Corporation, New York, beschrieben. Die Kennzeichung ist auf einer eigens vorgesehenen Anzeigefläche auf dem Kassettengehäuse untergebracht. Die Anzeigefläche weist dabei insbesondere Aussparungen auf, die mit entsprechenden Positionen auf der Anzeigefläche der Kennzeichnung korrespondieren. Die Aussparungen können entweder offen oder geschlossen sein und ermöglichen damit das Auslesen der entsprechenden Informationen mittels mechanischer Abtaster.

Aus dem Bereich von Chipkarten (Smart Cards) sind ferner bereits Verfahren bekannt, in relativ dünnen Trägerelementen (dort Checkkarten) integrierte Computerchips unterzubringen und entsprechende elektrische oder nicht-elektrische Übertragungsmittel für deren Kopplung mit einem Lesegerät bereitzustellen. Die Betriebssysteme bekannter Smart Cards befinden sich im Read-Only Memory (ROM) und bieten bereits Funktionen zur Dateiverwaltung und Zugriffssicherung. Anwenderdaten werden in einem relativ großen EEPROM-(Electrically Erasable Programmable ROM) Bereich (z.B. 8 KByte) abgelegt. Dieser Speichertyp ist praktisch beliebig oft löschbar und neu wiederbeschreibbar. Die erforderliche Programmierspannung beträgt ca. 20 V, die nicht extern zugeführt werden muß, da moderne EEPROMS sie auf dem Chip aus der 5-V-Betriebsspannung mittels einer Ladungspumpe ohne externe Bauelemente eigenständig generieren. Der benötigte Strom ist äußerst gering, der Schreibvorgang dauert etwa 10 ms. Die Haltezeit für die gespeicherte Information liegt bei etwa 10 Jahren. Ein derartiger EEPROM ist beispielsweise in einem Artikel von Helmuth Lemme "Der Mikrorechner in der Brieftasche", 2. Teil einer Artikelserie mit dem Untertitel "Die Chipkarten-ICs - eine Klasse für sich", Zeitschrift "Elektronik" 22, 1993, Seiten 52 ff. näher beschrieben.

Aus den vorgenannten Gründen können Smart Cards bereits auch mehrere Paßwörter für unterschiedliche Dateibereiche verwalten. Eine relativ hohe Datensicherheit wird dadurch garantiert, daß ein direkter Zugriff auf Daten im EEPROM unter Umgehung des Betriebssystems ausgeschlossen ist. Für das Ein- und Auslesen der auf der Smart Card gespeicherten Informationen werden meist Lesegeräte verwendet, die eine asynchrone serielle Halbduplex-Datenübertragung zwischen Karte und Lesegerät mit einer Datenrate von 9600 oder 19200 Baud ermöglichen.

Weiterhin werden zum Schutz von Daten bereits eine Reihe von Daten-Verschlüsselungsmechanismen angewendet. Ein äußerst sensibler Bereich ist dabei der Schutz von Daten während des Übertragungsvorganges selbst. In einem Artikel von Robert Brenner "Alles auf eine Karte gesetzt", Zeitschrift 'Elektronik' 9, 1994, insbesondere Seiten 42 ff., wird eigens zu dieser Problematik eine Datenverschlüsselung mittels des Data Encryption Standards (ANSI DES) X3.92-1981 beschrieben. Das Steuerungsprogramm des Lesegeräts muß ebenfalls über diesen Verschlüsselungsalgorithmus verfügen. Eine kodierte Zeichenkette wird von der Karte nach Empfang dekodiert und in eine Bestimmungsdatei geschrieben. Fordert nun das Lesegerät diese Daten an, so werden die Daten vor der Übertragung auf der Kartenseite kodiert und die vom Lesegerät empfangenen Daten auf dessen Seite dekodiert. Der DES-Algorithmus erwartet die Bereitstellung eines Kodierschlüssels, der sowohl dem Lesegerät als auch der Karte bekannt sein muß.

In einem 3. Teil der vorgenannten Artikelreihe von Helmuth Lemme mit dem Untertitel "In Zukunft immer mehr kontaktlose Chipkarten", Zeitschrift "Elektronik" 26, 1993, Seiten 70 ff., wird ein Chipkartenkonzept beschrieben, bei dem die Energie für die Versorgung des Chips sowie die zu speichernden Informationen jeweils induktiv übertragen werden. Der Hintergrund hierfür ist eine Schwachstelle derzeitiger Chipkarten, nämlich daß die elektrischen Kontakte durch Beanspruchung mit der Zeit verschleißen. Es sind daher bereits eine Reihe unterschiedlicher Systeme, wie z.B. die von der Firma ADE, Hamburg, entwickelte "C2"-Karte, vorgeschlagen worden. Diese kontaktlose Karte enthält einen zweiten Chip, genannt "Contactfree Chipcard Interface" (CCI) wie das in Bild 22 des Artikels gezeigte CCI-Chip vom Typ UBB1000 der Frima Philips Semiconductors. Diser Chip dient dazu, die von den Spulen aufgenommenen Signale in ISO-normgerechte Signale umzuwandeln. Es wird dabei meist eine Anordnung mit zwei Spulen vorgesehen, da das C2-Prinzip immer 90° Phasendifferenz zwischen den in den beiden Spulen induzierten Spannungen erfordert, um - den strengen Sicherheitsanforderungen entsprechend - wirksam zu vermeiden, daß ein Kartenleser oder dgl. beim Vorübergehen einer Person unbemerkt eine in der Tasche steckende Chipkarte anspricht und darauf etwas umprogrammiert.

Neben dem induktiven Übertragungsverfahren werden in dem Artikel auch kapazitive Verfahren angesprochen, wie etwa bei der dort in Bild 25 gezeigte Karte der Firma AT&T Corporation, die vier Elektroden für die kapazitive Übertragung aufweist. Mit den genannten Prinzipien der Fernkontaktierung von Chipkarten lassen sich einige Dezimeter Distanz überbrücken.

Für die gesicherte Speicherung großer Datenmengen bieten sich ferner optische Chipkarten (sogenannte "Opto-Smartcards") an, die Speicherkapazitäten bis hin zu einigen Megabyte ermöglichen. Für diese hohe Speicherkapazität werden auf einer laminierten Optocard beispielsweise 4121 Datenspuren von je 7,6 µm Breite registriert. Das Lesen und Schreiben nutzt "Pits" (Ätzgruben) und funktioniert ähnlich wie bei der einmal beschreibbaren Compact Disk (CD).

Im Bereich von Datenträgern der vorliegenden Gattung existieren allerdings bislang noch keine Lösungen zu der vorgenannten Problematik, bzw. weisen die bekannten Lösungsansätze noch die genannten Nachteile auf.

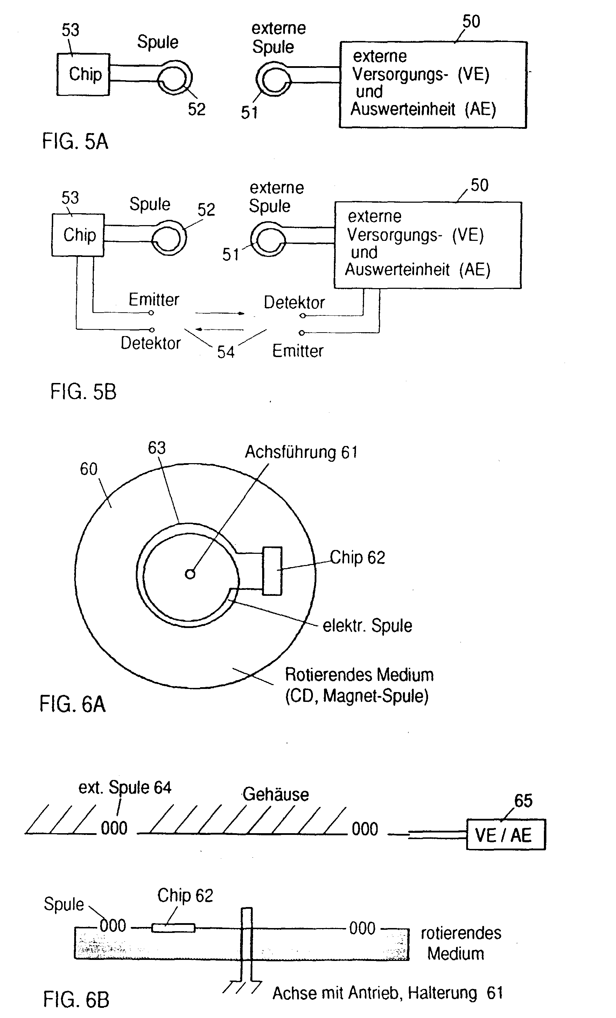

Die vorgenannten Nachteile des Standes der Technik werden bei der Erfindung dadurch vermieden, daß bei dem einzelnen Speichermedium zusätzlich ein programmierbarer Informationsträger, z.B. ein Chip, ein Hologramm oder ein Magnetstreifen, vorgesehen ist. Ein entsprechender Chip kann dabei als einfacher Speicher oder als Speicher mit zusätzlichem Micro-Controller ausgebildet sein. Dieser Chip kann dabei, lösbar oder fest, extern zugänglich am Schutzmantel, z.B. am Kassetten- oder Diskettengehäuse, des Speichermediums angeordnet werden. Unter Zuhilfenahme des im Bereich von Chipkarten bestehenden Know-how werden dabei die Gehäuse selbst nur unwesentlich verändert. Die Kopplung des Chips mit der Außenwelt, z.B. mit einer extern vorgesehenen Kontrolleinheit (z.B. Micro-Controller), kann über eine entsprechende elektrische Kontaktierung oder über ein kontaktloses Transponder-Verfahren (s. u.a. Fig. 5a, b) erfolgen.

Durch Nachrüsten mit einem kleinen preisgünstigen Halbleiter-Speicher (Chip) werden die Nachteile der vorbeschriebenen sequentiellen Speichermedien nahezu vollständig beseitigt. Eine Nachrüstung bestehender Informationsträger kann kompatibel mit den derzeit bestehenden Medien und deren mechanischem Formenschatz (Design) erfolgen und erlaubt somit eine hohe Akzeptanz bei den Herstellern der Schreib-/Lesegeräte und Speichermedien. Als 'Chip' kann sowohl ein funktionelles Speichermodul als auch ein informationsverarbeitendes Halbleitermodul in Betracht kommen.

Die seitens der Erfindung vorgeschlagene Chip-gestützte Zugriffsmethode weist gegenüber den sowohl im Bereich von sequentiellen Speichermedien als von nicht-magnetischen Festspeichermedien (z.B. Compact Disc oder CD-ROM) bestehenden Lösungen die folgenden Vorteile auf:
o Die aktuelle Position des sequentiellen Mediums kann zu jedem Zeitpunkt exakt festgehalten werden, ohne daß eine wiederholte Kalibrierung, beispielsweise durch Suchlauf zum Bandanfang oder Bandende, erforderlich ist.
o Der aktuelle Inhalt eines Datenträgers kann in der Weise gespeichert werden, daß bei Überschreiben von Informationen auf dem seqientiellen Medium ein Fortschreiben (Update) der neuen Organisation der Information im Chip erfolgt. Damit können nunmehr auch sequentiell organisierte Speichermedien fragmental betrieben werden. Dabei werden die Nutzdaten einer Informationseinheit nicht als zusammenhängende Blöcke, sondern in Teilstücken abgespeichert. Dies erlaubt die Nutzung von bereits fragmentierten sequentiellen Medien. Zudem wird ein gezieltes Überspringen (Skip) von Teilbereichen ermöglicht, z.B. unerwünschte Werbeblöcke in einem Film.
o Die Erfindung ermöglicht im besonderen ein einfaches und schnelles Auffinden einer gewünschten Information auf dem sequentiellen Medium, d.h. einen Direktzugriff (Random Access). Das im Chip vorgesehene Verzeichnis (Directory) sowie die Information über den aktuellen Stand des sequentiellen Mediums erlauben einen direkten Ziellauf des Schreib-/Lesegerätes zu der gewünschten Position auf dem sequentiellen Medium. Dies ist auch ohne vorherige Kalibrierung der Bandposition möglich.
o Bei der Sicherung von Dateninhalten können bestimmte Inhalte oder auch sämtliche Inhalte des sequentiellen Mediums vor unbefugtem Zugriff geschützt werden. Dabei wird im Chip eine entsprechende Information im Directory abgelegt, die einen Zugriff nur mit einem bestimmten Schlüssel erlaubt.
o Ein sehr effizienter Zugriffsschutz für die auf dem sequentiellen Speichermedium enthaltenen Informationen kann dadurch erreicht werden, daß die Nutzdaten mit einem speziellen Speicherungsformat auf dem Datenträger abgelegt werden. Die notwendigen Parameter für eine korrekte Wiedergabe der Daten können dann in dem Chip gespeichert sein. Die Parameter selbst können darüber hinaus über einen eigenen Zugriffsschlüssel gegen unbefugten Zugriff geschützt werden.
o Die Erfindung ermöglicht ferner eine detaillierte technische Klassifizierung des sequentiellen Datenträgers, beispielsweise der Betriebsparameter wie Spulgeschwindigkeit, Bandlänge, Magnetisierung, usw. Diese Parameter können in vorteilhafter Weise im Chip abgelegt werden und ermöglichen eine wenig aufwendige Anpassung der Lese-/Schreibvorgänge an das jeweilige Speichermedium.
o Die erfindungsgemäße Lösung stellt darüber hinaus einen wertvollen Ersatz von sogenannten "Hardware Keys" dar. Der Schutz eines bestimmten Anwendungsprogramms über einen Hardware-Key, z.B. einen "Dongle" oder "Dangle", ist nicht mehr erforderlich, da dieser Key in vorteilhafter Weise im Chip des sequentiellen Mediums (z.B. Diskette odr CD-ROM) abgelegt werden kann.
o Die Erfindung erlaubt darüber hinaus direktere und damit schnellere Datenbankzugriffe in Datenbanken, in denen sequentielle Medien wie CD-ROMs Verwendung finden. Auf Server-Rechnern bereitgestellte Datenbanken, die auf eine große Zahl archivierter Daten mittels sequentieller Medien zurückgreifen und zu diesem Zweck automatische Medien-Wechsler benutzen, können aus den oben genannten Gründen wesentlich schneller die gewünschten Informationen lokalisiert und ausgelesen werden.

Es wird hervorgehoben, daß die genannten Vorteile auch bei Speichermedien, bei denen bereits die genannten Verwaltungsfunktionen (directories) ausreichend unterstützt werden, bereits zum Tragen kommen, wie etwa bei Disketten oder CD-ROMs, obwohl bei diesen Medien die Information über die letzte Leseposition von untergeordneter Bedeutung ist. Dennoch können die übrigen aufgeführten Mechanismen, wie die genannte Klassifizierung oder die Hardware-Keys, auch bei diesen Medien vorteilhaft eingesetzt werden.

Auf seiten der für das sequentielle Medium erforderlichen Schreib-/Lesegeräte können Kontaktiereinrichtungen vorgesehen sein, wie sie z.B. bereits im Bereich von Chipkarten eingesetzt werden. Da die sequentiellen Medien von Hause aus eine präzise Führung der Gehäuse voraussetzen, ist eine mechanische Kontaktierung des auf dem Gehäuse angeordneten Chips unproblematisch.

Die Verwaltung der Inhalte des sequentiellen Mediums kann nun von einem intern in dem Chip oder extern in dem Schreib-/Lesegerät angeordneten Micro-Controller über eine elektrische oder drahtlose Schnittstelle (Interface) übernommen werden. Hierfür können bereits standardisierte, aber auch individuelle Verfahren eingesetzt werden.

Der Chip, mit dem sequentiellen Speichermedium in direkter mechanischer Verbindung, ermöglicht insbesondere, sämtliche Parameter und Zustände des sequentiellen Speichermediums während des Betriebs festzuhalten und dauerhaft zu speichern. Als Speichermittel kann daher vorteilhafterweise ein EEPROM oder ein Flash-Speicher (ein EEPROM Modul das mittels Diskette fortgeschrieben (updated) werden kann) eingesetzt werden.

In einem weiteren Ausführungsbeispiel kann das Medium lösbar mit dem Datenträgergehäuse verbunden sein, damit es nach einer erfolgten Trennung von dem Gehäuse zu einem späteren Zeitpunkt wieder eingeführt werden oder zwischenzeitlich in einer anderen Schreib-/Leseeinheit bearbeitet werden kann. Dabei meldet der Chip die aktuelle Position des sequentiellen Mediums sowie den Inhalt und gegebenenfalls weitere Informationen des Mediums sofort nach dem Wiedereinbau in den Datenträger.

Das erfindungsgemäße Verfahren sowie die Vorrichtung werden im folgenden Teil anhand von in den Zeichnungen dargestellten Ausführungsbeispielen näher erläutert. Im einzelnen zeigen hierbei
Fig. 1 ein Ausführungsbeispiel der Erfindung, bei dem der erfindungsgemäße Chip am Gehäuse einer Videokassette befestigt ist;
Fig. 2 anhand einer Schemazeichnung das Zusammenspiel eines sequentiellen Speichermediums mit einer Schreib-/Leseeinheit entsprechend der Erfindung;
Fig. 3a,b ein Ausführungsbeispiel der Erfindung, bei dem der Chip mit einem Gehäuse fest verbunden ist, sowie ein Ausführungsbeispiel mit einer lösbaren Verbindung des Chips mit einem Gehäuse;
Fig. 4a-c Ausführungsbeispiele zur elektrischen Kontaktierung eines gemäß der Erfindung in einem Speichermedium-Gehäuse untergebrachten Chips;
Fig. 5a,b Ausführungsbeispiele für eine (elektrisch) kontaktfreie Kopplung zwischen dem Chip und einer externen Versorgungs- und Auswerteeinheit auf der Grundlage elektromagnetischer Signal- und Energieübertragung;
Fig. 6a,b zwei orthogonale Ansichten eines CD-ROM Speichermediums mit zugehörigem Achsantrieb eines Motors sowie einer Einrichtung für die Fernübertragung von Versorgungsenergie und Informationen zwischen dem Chip und einer Schreib-/Leseeinheit mittels eines wechselnden Magnetfeldes;
Fig. 7 ein Ausführungsbeispiel für die Anbringung des Chips an einer CD-ROM, wobei der Chip in dem Datenträger vollständig eingeschlossen ist;
Fig. 8a,b zwei orthogonale Ansichten eines CD-ROM Speichermediums mit zugehörigem Achsantrieb eines Motors sowie einer Einrichtung für die Fernübertragung von Versorgungsenergie und Informationen zwischen dem Chip und einer Schreib-/Leseeinheit, entsprechend Fig. 6, jedoch mittels eines statischen Magnetfeldes;
Fig. 9 die logische und physikalische Verbindung zwischen dem Chip und einem 'Host'-System bei einem Ausführungsbeispiel der Erfindung;
Fig.10a,b anhand eines Flußdiagramms einen Lesezugriff und einen Schreibzugriff eines Hostsystems auf einen erfindungsgemäßen Chip, der als passives Bauelement (hier nichtflüchtiger Speicher) ausgebildet ist;
Fig. 11a ein Ausführungsbeispiel der Erfindung, bei dem der Chip - im Gegensatz zu den Figuren 10a und 10b - als informationsverarbeitendes Bauelement (Mikroprozessor und Speicher) ausgeführt ist;
Fig. 11b ein funktionelles Blockdiagramm zum Ausführungsbeispiel gemäß Fig. 11a zur Darstellung der unterschiedlichen Kanäle für die Übertragung von Nutzdaten und Kontrollsignalen zwischen dem Chip und einer externen Lese-/Schreibeinheit;
Fig. 12 eine bevorzugte logische Speicheraufteilung bei einem Chip gemäß der Erfindung; und
Fig. 13 eine Übersicht über bevorzugte Funktionseinheiten des erfindungsgemäßen Chips.

Der Erfindung liegt das Konzept zugrunde, bei einem Speichermedium, insbesondere einem sequentiell organisierten Datenträger, eine zweite von dem Speichermaterial selbst völlig unabhängige, jedoch logisch physikalisch gekoppelte informationsspeichernde und/oder -verarbeitende Funktionseinheit vorzusehen, mittels der der ursprüngliche Funktionsumfang des Speichermediums erheblich erweitert werden kann.

Die zugrundegelegten Speichermedien bestehen, z.B. bei einem magnetischen Bandspeicher, meist aus beweglichen Teilen, die für die Bewegung des magnetischen Trägermaterials erforderlich sind, sowie einem feststehenden Rahmen (Gehäuse), der die beweglichen Teile umschließt, deren mechanische Führung bestimmt und eine einfache Handhabung des gesamten Mediums erlaubt. Je nach Ausführungsform kann der Rahmen ein vollständig geschlossenes Gehäuse mit einem Öffnungsmechanismus für den Zugriff auf das Medium darstellen. Für die vorliegende Erfindung ist die äußere und innere Form des Rahmens allerdings völlig unerheblich.

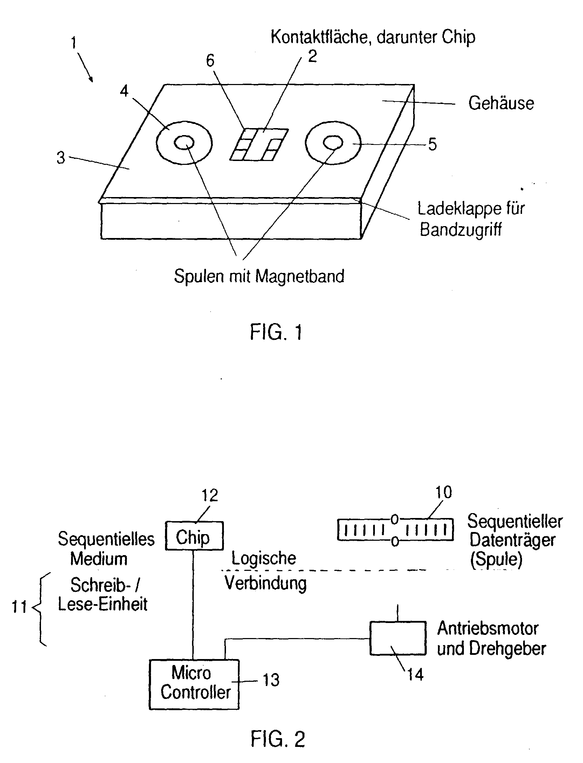

Grundsätzlich besteht die Möglichkeit, den Chip für die Zugriffssteuerung am Rahmen selbst anzubringen. Einen entsprechenden Datenträger 1 zeigt die perspektivische Zeichnung in Fig. 1, in der insbesondere ein Ausführungsbeispiel für die Plazierung des Chips 2 am äußeren Teil des Gehäuses 3 einer Videokassette, in diesem Fall auf einer der flachen Seiten mittig und symmetrisch zwischen Spulenkörpern 4, 5, gezeigt ist. Der Chip 2 ist mit elektrischen Kontaktflächen (Pads) 6 ausgestattet, die eine einfache mechanische Druckkontaktierung mit einer entsprechenden Gegenelektrode in einem Videorecorder ermöglicht. Der Chip 2 kann jedoch grundsätzlich an jeder anderen Stelle des Gehäuses, als der hier gezeigten Position, angeordnet werden. Eine Anordnung des Chips 2 innerhalb des Rahmens, gegebenenfalls auf den beweglichen Teilen selbst (z.B. auf einer der Bandspulen 4, 5) ist ebenso möglich.

Die Schemazeichnung in Fig. 2 dient zur Illustration des Zusammenspiels eines sequentiell organisierten Speichermediums 10 mit einer Schreib-/Leseeinheit 11 gemäß der Erfindung. Die logische Verbindung zwischen dem Chip 12 und einem Micro-Controller 13 kann auf eine mehrpolige elektrische Verbindung oder eine drahtlose Transponder-Verbindung aufbauen. Der Micro-Controller steht ferner mit einem Antriebsmotor 14 der Schreib-/Leseeinheit 11 in Verbindung, und übermittelt an einen Drehgeber Steuersignale für die Motorsteuerung, d.h. Positionsdaten bei einem Schrittmotor sowie dessen Umdrehungsgeschwindigkeiten. Somit ist der Micro-Controller jederzeit in der Lage, den aktuellen Zustand (z.B. Positionsdaten) des Speichermediums im Chip festzuhalten.

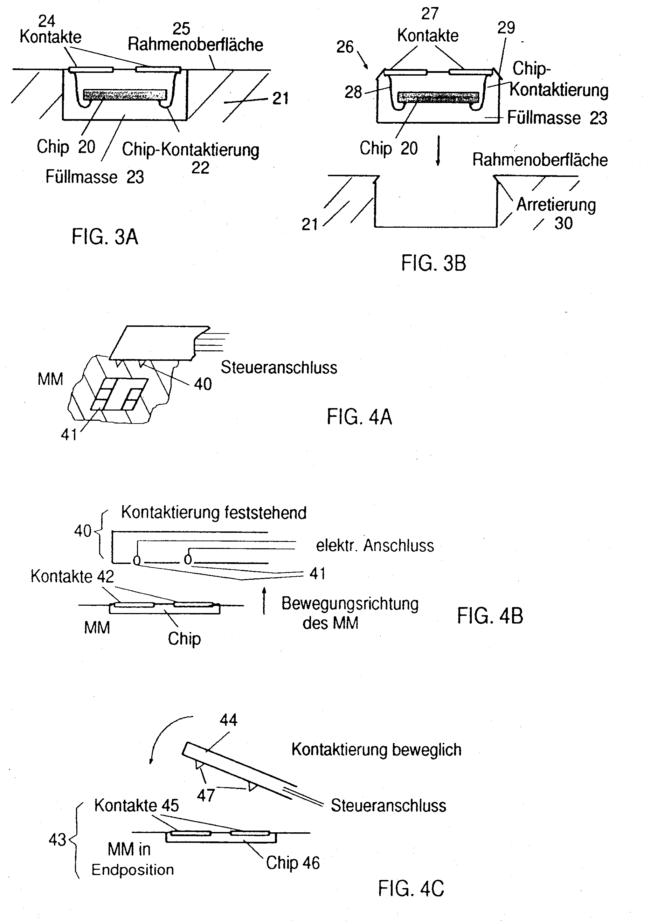

Die Figuren 3a und 3b zeigen Ausführungsbeispiele für die Anbringung des Chips 20 an einem Datenträgergehäuse 21. Die beiden gezeigten Montageformen sind nahezu bei jedem Gehäusetyp, beispielsweise bei einem Videokasetten-Gehäuse, bei einem Spulenkörper, oder bei einer CD-ROM-Scheibe, anwendbar.

Im einzelnen zeigt Fig. 3a ein Ausführungsbeispiel, bei dem der Chip 20 in das Gehäuse 21 fest eingebracht ist. Der Chip 20 ist dabei in eine Vertiefung 22 des Gehäuses 21 eingelassen und wird mittels einer Füllmasse 23 in der Vertiefung 22 fixiert gehalten. Die extern zugänglichen Kontaktflächen 24 oberhalb des Chips 20 fluchten dabei mit der entsprechenden Gehäuseoberfläche 25. Für den Einbau des Chips 20 im einzelnen können Kenntnisse aus dem Bereich der Chipkarten angewendet werden.

Demgegenüber zeigt Fig. 3b ein besonders vorteilhaftes Ausführungsbeispiel der Erfindung, das eine lösbare Verbindung des Chips 20 mit dem Gehäuse 21 vorsieht. Der Chip 20 ist hierbei in einem Modul 26 untergebracht, das auch nach außen zugängliche Kontaktelemente 27 beinhaltet. Das Modul 26 ist in diesem Beispiel so ausgebildet, daß der Chip 20 - ähnlich wie in Fig. 3a - mittels einer Füllmasse 28 in das Modulgehäuse 26 eingelassen ist, und die Kontaktelemente 27 mittels Drähten nach außen geführt werden. Zudem ist eine Einkerbung 29 vorgesehen, die einen festen Halt des Chipmoduls 26 in dem Rahmen 21 ermöglicht. Eine entsprechende Arretierung 30 ist an dem Rahmen 21 selbst vorgesehen.

Die Figuren 4a und 4b sowie Fig. 4c zeigen unterschiedliche Ausführungsformen zur elektrischen Kontaktierung eines in einem Rahmen des Speichermediums untergebrachten Chips. Im einzelnen zeigen die Figuren 4a und 4b eine Kontaktierungseinheit 40, bei der die Kontakte 41 der Lese-/Schreibeinheit räumlich feststehend angeordnet sind und wobei ein elektrischer Kontakt mit den auf dem Chip angeordneten Kontaktflächen (Pads) 42 dadurch hergestellt wird, daß der Datenträger unter einem Winkel oder senkrecht an die Kontakte der Lese-/Schreibeinheit herangeführt wird.

Im Gegensatz dazu wird bei dem Ausführungsbeispiel gemäß Fig. 4c der Datenträger 43 zunächst aus einer beliebigen Richtung in eine Endposition gebracht. Nach Erreichen der Endposition wird eine an der Lese-/Schreibeinheit angeordnete Kontaktierungseinrichtung 44 durch einen mechanischen oder elektrisch gesteuerten Mechanismus auf die Kontaktoberfläche 45 des Chips 46 aufgesetzt. Die Kontaktierungseinrichtung 44 stellt dabei um eine, in der Ebene der Kontaktflächen 45 des Chips 46 liegende, Achse bewegliche Kontakte 47 bereit, mittels derer die Kontakte selbst an den bereits in einer Endposition befindlichen Datenträger herangeführt werden. Diese Kontaktierungsform erlaubt vorteilhafterweise eine Plazierung des Chips an einer beliebigen Stelle des Datenträgergehäuses.

Im folgenden Teil werden Ausführungsbeispiele für eine drahtlose Kontaktierung des Chips beschrieben. Diese Kontaktierungsformen finden insbesondere Verwendung bei Datenträgern, bei denen der Chip auf einem beweglichen Teil angeordnet ist, beispielsweise auf einem Spulenkörper einer Videokassette oder einer CD-ROM-Scheibe. Die Figuren 5a und 5b zeigen Ausführungsformen, bei denen die elektrische Kopplung zwischen dem Chip und einer externen Versorgungseinheit, bei der die Lese-/Schreibeinheit als Teil einer Auswerteeinheit realisiert ist, auf der Basis des bekannten Transponder-Verfahrens erfolgt.

In dem Ausführungsbeispiel gemäß Fig. 5a erzeugt die externe Versorgungseinheit 50 mittels einer externen Spule 51 ein elektrisches Wechselfeld, das in einer auf der Chipseite angeordneten Spule 52 durch elektrische Induktion ebnenfalls eine Wechselspannung hervorruft Die externe Spule 51 kann hierbei in jeder dem Fachmann geläufigen Form und Weise ausgeführt sein. Auf die Details für eine Implementierung der Spule 52 auf der Chipseite wird nachfolgend noch näher eingegangen. In dem Chip wird nun aus dieser Wechselspannung eine interne - meist über die Zeit konstante - Versorgungsspannung erzeugt, was ebenfalls mit dem Fachmann bekannten Verfahren ausgeführt werden kann. Durch Modulation der von der externen Spule 51 übertragenen Wechselspannung werden in dem Ausführungsbeispiel dem Chip 53 Informationen zugeführt. Der Chip 53 sendet seinerseits durch Modulation seiner Wechselspannung Informationen über die beiden Spulen 51, 52 an die Versorgungseinheit.

In dem in Fig. 5b gezeigten Ausführungsbeispiel erzeugt die externe Versorgungseinheit 50, wie in dem in Fig. 5a bereits gezeigten Beispiel, ein elektrisches Wechselfeld zur Energieversorgung des Chips 53. Im Unterschied zu Fig. 5a erfolgt aber der Austausch von Informationen zwischen der Versorgungseinheit 50 und dem Chip 53, und vice versa, auf optischem Weg, und zwar in diesem Beispiel über eine Emitter-Detektor-Strecke 54, bei der der Emitter als LED (Light-Emitting Diode) oder als Laserdiode, und bei der der Detektor beispielsweise als Photodiode ausgeführt sein kann. Die erforderlichen optischen Bauelemente können diskret aufgebaut oder aber auf dem Chip direkt integriert sein. Vorteile der optischen Übertragung gegenüber einer elektrischen Übertragung sind der relativ einfache Aufbau, die erreichbaren höheren Datenübertragungsraten, die größere Abhörsicherheit, die Möglichkeit der Separation verschiedener Übertragungskanäle durch Verwendung verschiedener optischer Frequenzen (Spektralfarben), sowie die Möglichkeit des Betriebs mehrerer Einheiten auf lokal eng begrenztem Raum, z.B. im Falle von CD-Wechslern (Serverbetrieb).

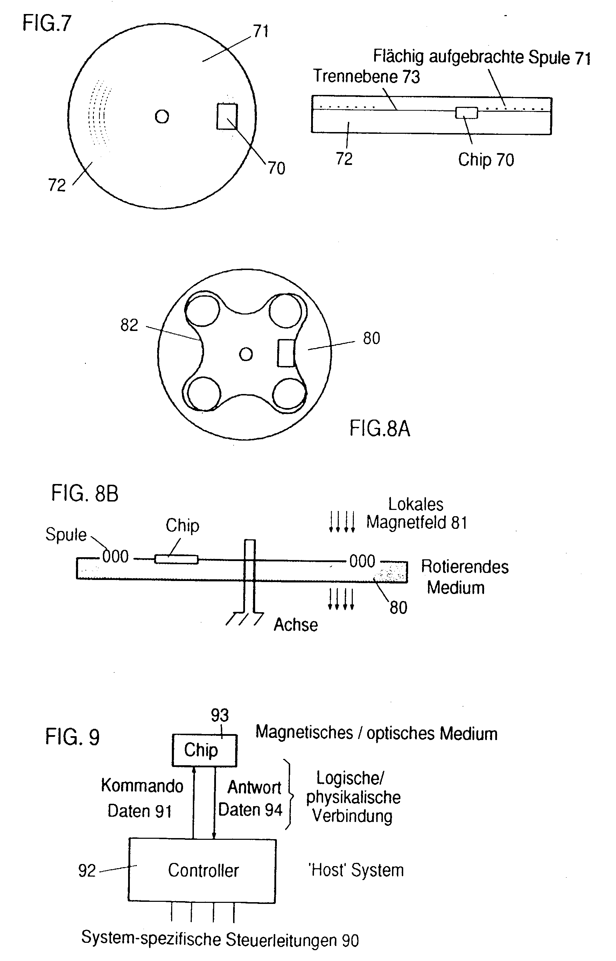

Anhand der Figuren 6a,b und 7 wird nun ein Ausführungsbeispiel beschrieben, in dem ein Datenträger mittels einer extern angeordneten Versorgungseinheit elektrisch versorgt wird.

Zunächst zeigt Fig. 6a zwei orthogonale Ansichten eines rotierenden Teils 60 eines Speichermediums, beispielsweise einer CD-ROM-Scheibe oder eines Spulenkörpers eines Bandmediums, mit zugehörigem Achsantrieb 61 eines (hier nicht näher dargestellten) Antriebmotors. Als Einrichtung für die Fernübertragung von Versorgungsenergie und Informationen zwischen dem Chip 62 und einer Versorgungseinheit (Schreib-/Leseeinheit) mittels eines wechselnden Magnetfeldes ist die Versorgungsleitung für den Chip 62 als elektrische Spule 63 ausgelegt. Die Anbringung von Chip 62 und Spule 63 hat bei Medien, die mit höherer Drehzahl betrieben werden, so zu erfolgen, daß keine Unwucht bei der Betriebsdrehzahl auftritt. In Fig. 6b sind nun die entsprechenden Übertragungseinrichtungen auf Seite der Versorgungseinheit dargestellt, sowie deren Zusammenwirken mit den vorgenannten Einrichtungen. Die externe Spule 64 der Versorgungseinheit 65 kann dabei sowohl oberhalb als auch unterhalb des rotierenden Mediums angeordnet sein.

Eine mögliche Variante der Anbringung von Chip 70 und Spule 71 auf dem Speichermedium 72 ist der vollständige Einschluß dieser Bauteile in das Medium 72, was in Fig. 7 am Montagebeispiel eines Chips 70 in einer CD-ROM 72 dargestellt ist. Zur Herstellung einer solchen Anordnung kann zunächst auf eine Zwischenlage 73 des Mediums 72 (in der Trennebene zwischen zwei Lagen) eine aus leitendem Material, z.B. aufgedampftem Aluminium, bestehende spiralförmige Leiterstruktur 71 aufgebracht werden. Hierbei können im Bereich von Materialaufdampfung gängige Methoden, wie Maskentechniken oder Laserverdampfen, zum Einsatz gebracht werden. Durch entsprechende Formgebung, oder aber über einen isolierten Steg, kann eine Kontaktierung der beiden Spulenenden an den Chip erreicht werden. Dieser kann in vorteilhafter Weise, z.B. in eine entsprechende Aussparung im nichtleitenden Trägermaterial, eingebettet werden.

Demgegenüber zeigen die Figuren 8a,b zwei orthogonale Ansichten eines rotierenden Speichermediums 80 oder eines rotierenden Teils eines Speichermediums, bei dem die Übertragung der Versorungsenergie - und gegebenenfalls der übertragenen Informationen - ohne eine externe Versorgungseinheit erfolgt, wobei jedoch ein außerhalb des Mediums erzeugtes, das rotierende Medium durchflutendes statisches Magnetfeld 81 zugrundegelegt ist. Eine auf dem rotierenden Medium 80 angebrachte Spule 82 ist bei dieser Ausführungsform so gestaltet, daß bereits die elektrische Induktion eines statischen Magnetfeldes 81, das das rotierende Medium 80 auch nur teilweise durchsetzt, ausreicht, um die für den Betrieb des Chips erforderliche Versorgungsspannung zu erzeugen. Diese Ausführungsform eignet sich insbesondere bei nicht-magnetischen Medien wie z.B. CD oder CD-ROM, da - im Gegensatz zu dem vorherigen Ausführungsbeispiel - ein statisches Magnetfeld die auf einem magnetischen Speichermedium gespeicherten Informationen zerstören würde. Es sind darüber hinaus verschiendene Ausführungsformen der Spule möglich, wobei allerdings das Grundprinzip immer auf einer Änderung des magnetischen Flusses innerhalb der Spulenschleifen (Induktionsgesetz) basiert.

Gegenüber den in den Figuren 7 und 8 gezeigten Beispielen kann die elektrische Versorgung des Chips auch auf optischem Wege bewerkstelligt werden. Bei einem hier nicht näher beschriebenen Ausführungsbeispiel wird auf das rotierende Medium ein photoelektrisch aktives Material, z.B. eine Dünnschicht-Photozelle, aufgebracht, mit deren Hilfe die Versorgung des Chips erfolgt. Die Übertragung von Daten erfolgt gemäß den unter dem Kapitel 'drahtlose Kontaktierung' beschriebenen Verfahren.

Die logische Anbindung des erfindungsgemäßen Datenträgers an ein 'Host'-System (z.B. Versorgungs- und Lese-/Schreibeinheit) wird nun anhand von Fig. 9 erläutert, in der systemspezifische Steuerleitungen 90 eines Ausführungsbeispiels der Erfindung dargestellt sind. Die physische Anbindung der Einheiten kann dabei über die bereits erläuterten magnetischen oder optischen Medien, oder aber über andere Medien, z.B. hochfrequente elektrische Übertragungsstrecken, erfolgen. Die Anbindung erfordert zum einen eine logische Verbindung zur Übertragung von Kommandos 91 zwischen einer beim Host-System angeordneten Kontrolleinheit 92 zum Chip 93, zum anderen eine logische Verbindung zur Übertragung von entsprechenden Antwortdaten 94 des Chips 93 zur Kontrolleinheit 92. Entsprechend der Information aus dem Chip 93 kann die Kontrolleinheit 92 eine Steuerung im System vornehmen (z.B. Schreib-/Lesekopf an eine bestimmte Position heranfahren). Umgekehrt bezieht die Kontrolleinheit alle zur Speicherung auf dem Chip erforderlichen Daten vom System und leitet diese - gegebenenfalls aufbereitet - an den Chip zur Speicherung weiter.

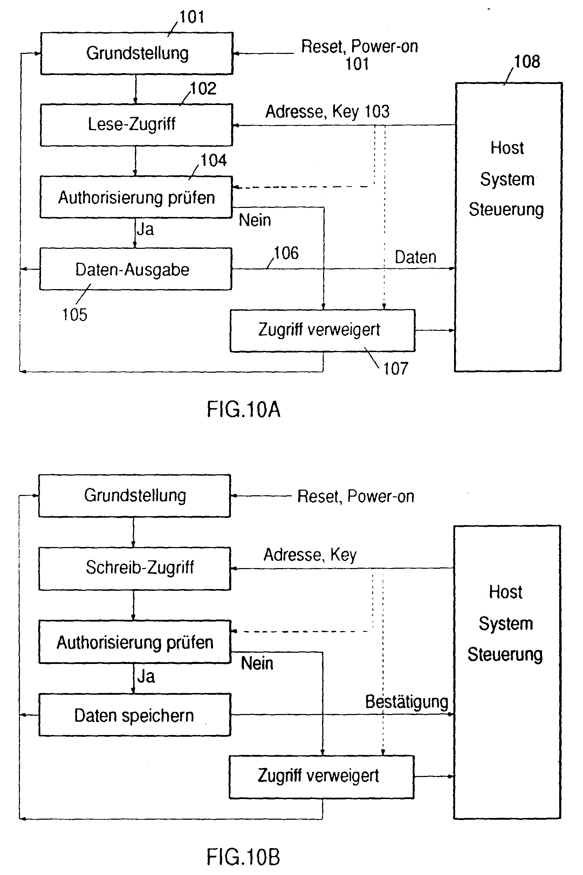

Anhand der in den Figuren 10a und 10b dargestellten Block- bzw. Flußdiagramme werden nun die erforderlichen Schritte bei einem Lesezugriff und bei einem Schreibzugriff eines Host-Systems auf einen erfindungsgemäßen Chip beschrieben, wobei der Chip als passives Bauelement, in dem vorliegenden Beispiel als nichtflüchtiger Speicher, ausgebildet ist. Als Bauelemente kommen hierbei insbesondere ein EEPROM, FLASH, EPROM, oder ROM-Speicher in Betracht. In der linken Hälfte des Diagramms sind die im Chip vollzogenen Arbeitsschritte bei einem Lesezugriff dargestellt, wobei die entsprechenden Interaktionen mit der Host-Systemsteuerung im rechten Teil dargestellt sind. Nach der Inbetriebnahme (POWER-ON) 100 oder einer Rücksetzung (RESET) des Chips befindet sich dieser zunächst in einem Grundzustand 101. Im Falle eines Lesezugriffs 102 auf den Chip, der über das Host-System initiiert wird, wird zunächst die jeweilige Zieladresse der avisierten Daten vom Host-System zum Chip übertragen 103. Zudem ist für die Überprüfung 104 der Authorisierung des Zugreifenden die Übergabe eines Schlüssels (KEY) an den Chip erforderlich. In dem vorliegenden Beispiel wird nun im Chip anhand des Schlüssels die Authorisierung geprüft. Dieser Schritt kann jedoch auch entfallen, falls keine Verschlüsselung erforderlich ist. Für den Fall, daß eine Authorisierung erfolgreich durchgeführt wurde, werden nun die gewünschten Daten aus dem Datenträger ausgelesen 105 und an das Host-System übermittelt 106. Gleichzeitig wird der Chip wieder in den Grundzustand gesetzt 101. Liegt keine gültige Authorisierung zum Lesen von Informationen von dem Datenträger vor, wird der Zugriff verweigert 107 und eine entsprechende Nachricht an das Host-System 108 übermittelt. Entsprechend wird der Chip wieder zurückgesetzt. Im Falle eines Schreibzugriffs wird in entsprechender Weise verfahren, wobei die einzelnen Verfahrenschritte mit denen in Fig. 10b korrespondieren, jedoch mit der einzigen Ausnahme, daß hier bei vorliegender Authorisierung die entsprechenden Daten auf dem Datenträger gespeichert werden und eine entsprechende Bestätigung an das Host-System gesendet wird.

Der Chip als passives Funktionselement erlaubt zudem die Ausführung einfacher Verwaltungsfunktionen. Diese betreffen zum einen das Lesen und Schreiben von für das jeweilige Speichermedium charakteristischen Informationen wie z.B. physischen Daten des Mediums, zum anderen das Lesen und Speichern der auf dem Speichermedium bestimmungsgemäß gespeicherten Informationen selbst. Darüber hinaus ermöglicht die vorgeschlagene Architektur eine - verglichen mit dem vorbeschriebenen Stand der Technik - relativ einfache Steuerung von Zugriffsrechten mittels erweiterter Adressierung, die etwa für das Medium spezifische Daten wie Spulgeschwindigkeit, Gesamtlaufzeit, Frequenzgang, o.ä., oder informationsspezifische Daten wie z.B. ein Inhaltsverzeichnis der gespeicherten Informationen, Titel, Positionsdaten der einzelnen Informationen, oder Random Access-Parameter, umfassen können. Darüber hinaus können nutzungsspezifische Daten wie Nutzungshäufigkeit des Datenträgers, Leihfristen (Videoverleihgeschäft), oder Datumseinträge, Berücksichtigung finden. Dabei ist es vorteilhaft, diese erweiterten Funktionen des Datenträgers durch entsprechende Programmierung der Host-Systemsteuerung zu erreichen.

Im Gegensatz zu Fig. 10 ist bei dem in Fig. 11a gezeigten Ausführungsbeispiel der Chip als informationsverarbeitendes Bauelement (Mikroprozessor und nichtflüchtiger Speicher) ausgeführt. Durch Eingabe 120 von Kommandos oder Daten 121 vom Host-System 122 zum Chip 123 wird der Chip 123 aus dem Grundzustand 124 aktiviert und die entsprechenden Befehle oder Daten an einen Kommando-Interpreter 125 weitergeleitet. Die vom Kommando-Interpreter ausgeführten Aktionen können - wie im Ausführungsbeispiel gemäß Fig. 10 - Lesen und/oder Schreiben 126 von medienspezifischen Daten sein. Darüber hinaus kann der Kommando-Interpreter auch zusätzliche funktionsspezifische Hardware 127 des Chips ansprechen bzw. aktivieren.

In diesem Ausführungsbeispiel ergeben sich - über das passive Element hinaus - eine Vielzahl zusätzlicher Funktionen, die durch Programmierung des Kommando-Interpreters gegeben sind, wie z.B. die Verwaltung von spezifischen Daten verschiedener Benutzer des Datenträgers, Prioritäten für die Benutzung, Komprimierung und Dekomprimierung der gespeicherten Daten, Zugriffssteuerung über einen Schlüssel (KEY), sowie Filter- und Korrekturfunktionen. Als zusätzliche Funktionen können beispielsweise ein authorisierter Zugriff auf nur bestimmte Programme und/oder Datensätze, ein nachträgliches Anbringen von 'Fixes' bei Read-Only Datenträgern (z.B. CD-ROM), oder veränderte Aufzeichnungs- und/oder Abspielformate unterstützt werden.

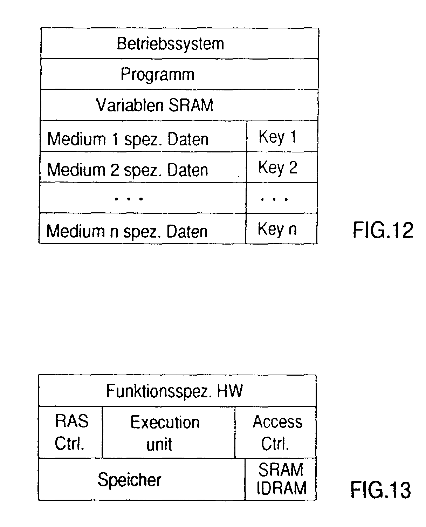

Eine bevorzugte logische Einteilung des auf dem Chip befindlichen Speichers zeigt Fig. 12. Das Betriebssystem sowie das oder die zugrundegelegten Programme für die Chipfunktion werden vorteilhafterweise in einem nichtflüchtigen Speicher, z.B. einem ROM oder EEPROM, untergebracht. Entsprechendes gilt hinsichtlich der für den jeweiligen Datenträger spezifischen Variablen sowie der für das einzelne Medium spezifischen Daten. Dagegen werden zur Bearbeitung der Nutzdaten erforderliche Variablen zweckmäßigerweise in einen flüchtigen Speicher, z.B. einen SRAM, gespeichert.

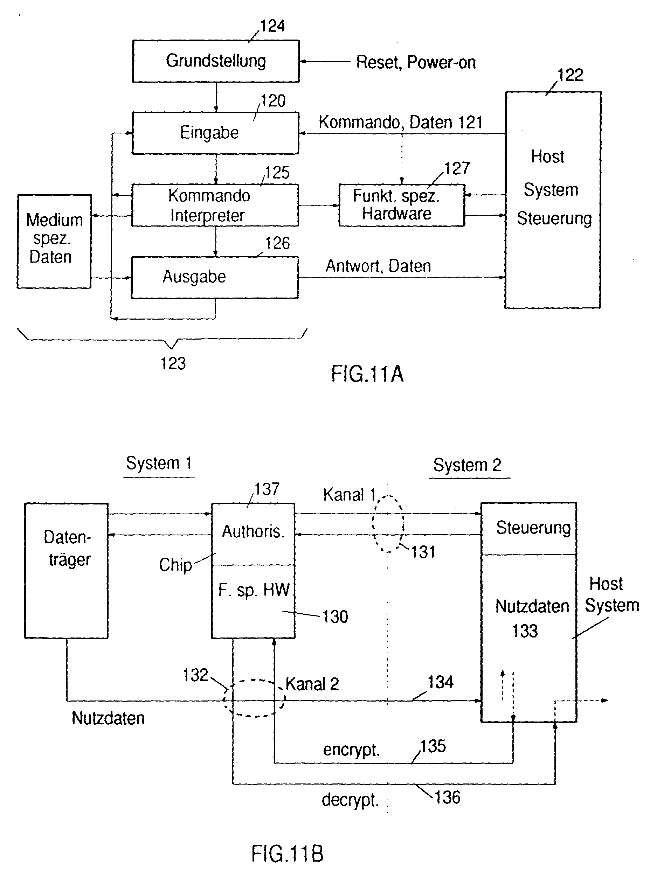

In Fig. 13 ist schließlich eine Übersicht über die bevorzugten Funktionseinheiten des erfindungsgemäßen Chips gezeigt. Der Speicher setzt sich aus einem nichtflüchtigen und einem flüchtigen Speicherelement zusammen. Der nichtflüchtige Teil enthält unter anderem notwendigerweise die für das POWER-ON benötigten Programmteile. Neben der gemäß Fig. 11 erforderlichen Prozessoreinheit (Execution Unit) kann zusätzlich eine RAS (Reliability-Availability-Serviceability)-Steuerung sowie eine hardwaregestützte Zugriffssteuerung (Access Control) vorgesehen sein. Dabei werden die Zugriffsrechte eines Nutzers gegen gespeicherte Schlüssel geprüft, die den Zugriff auf spezifische Daten erlauben, oder aber mittels einer - nicht programmgesteuerten - speziellen Hardware den Zugriff verhindern. Hierdurch wird ein höheres Maß an Sicherheit erreicht.

Als funktionsspezifische Hardware kommt z.B. eine Hardware-Encryption/Decryption Realisierung in Betracht, welche die in Figuren 10a und 10b gestrichelt dargestellte vereinfachte Authorisierungsprüfung mittels eines schnellen Decryption-Bypasses ermöglicht. Die in Fig. 11b näher gezeigte funktionsspezifische Hardware 130 dient zur Ausführung von komplexen, rechenintensiven (performance-intensiven) stets gleichverlaufenden Berechnungen von Datenströmen des Hostsystems. Sie kann zweckmäßigerweise komplett als Hardware ausgebildet sein, womit sie echtzeitfähig (Realtime) wird und kein Programm enthält, das in irgendeiner Weise datentechnisch manipuliert werden kann. Die funktionsspezifische Hardware wird in ihrem Verhalten vom Kommando-Interpreter beeinflußt bzw. gesteuert. Als Beispiel sei eine CD-ROM mit stark komprimierten Videodaten genannt. Hierbei erlaubt die funktionsspezifische Hardware ein Abspielen der Videodaten in verschiedenen Formaten (MPEG, H.320) in ein und demselben Abspielgerät. Gleichzeitig wird ein sehr wirkungsvoller Kopierschutz realisiert, der ein Kopieren einer CD-ROM (insbesondere einer Multimedia-CD) - ohne den zugehörigen Chip - unmöglich macht.

Aus der Fig. 11b wird ferner deutlich, daß aufgrund der funktionsspezifischen Hardware 130 ein Zweikanalsystem 131, 132 gebildet wird. Über den einen Übertragungskanal 132 werden die - in diesem Beispiel - verschlüsselten Nutzdaten 133 zunächst über eine Leseeinheit vom Datenträger zum Host-System übertragen 134, die verschlüsselten Daten dann vom Host zur funktionsspezifischen Hardware des Chips, d.h. zum Datenträger zurückübertragen 135, und von der funktionsspezifischen Hardware 130, beispielsweise in Echtzeit, eine Entschlüsselung der Nutzdaten durchgeführt. Gleichzeitig werden die bereits entschlüsselten Daten über eine Rückleitung wieder an den Host zurückübertragen 136, der die Daten dann z.B. an eine Funktionseinheit zur optischen und/oder akustischen Präsentation der Nutzdaten übergibt. Über einen zweiten Übertragungskanal 131 lassen sich dann gleichzeitig z.B. für den Chip oder für den Motorantrieb des Datenträgers bestimmte Steuerkommandos oder z.B. die erforderlichen Informationen für die Abwicklung einer Benutzer-Authorisierung 137 übertragen.

Als Chip-Funktionen kommen bei einer CD (CD-ROM) oder Diskette die Bereiche Zugriffsrechte, Bug-Liste (Updates), Nutzungserlaubnis (-statistik), Benutzerspezifische Informationen (z.B. Markenhinweise) oder informationsspezifische HW in Betracht. Bei Bandmedien wie einer Kassette (z.B. Musikkassette) können desweiteren die Bereiche Inhalt, Zustand (Bandposition), schneller Zugriff (Random Access), Fragmentierungsdaten oder Synchronisation (z.B. bei Tandem Band), vorgesehen sein.

## Patentansprüche

1. Verfahren zur Zugriffssteuerung bei auf Datenträgern angeordneten Speichermedien, insbesondere bei sequentiell organisierten Speichermedien, in denen erste Informationen gespeichert sind, wobei bei einem Zugriff auf das Speichermedium zweite, bei dem Speichermedium von den ersten Informationen getrennt gespeicherte zweite Informationen berücksichtigt werden, **dadurch gekennzeichnet**, **daß** mittels der zweiten Informationen eine Authorisierung für einen Zugriff auf die ersten informationen erfolgt.

2. Verfahren nach Anspruch 1, bei dem mittels der zweiten Informationen eine Fehlerkorrektur der ersten Informationen erfolgt.

3. Verfahren nach Anspruch 1 oder 2, bei dem mittels der zweiten Informationen eine zeitliche Synchronisation zu einer externen Funktionseinheit bei der Übertragung der ersten Informationen erfolgt.

4. Verfahren nach einem oder mehreren der voranstehenden Ansprüche, bei dem die zweiten Informationen Konfigurationsdaten von auf dem Speichermedium gespeicherten Programmen darstellen.

5. Verfahren nach einem oder mehreren der voranstehenden Ansprüche, bei dem die Übertragung der ersten und/oder der zweiten Informationen zwischen dem Speichermedium und einer externen Funktionseinheit mittels eines Transpondermechanismus' erfolgt.

6. Verfahren nach einem oder mehreren der voranstehenden Ansprüche, bei dem die für die Verarbeitung der zweiten Informationen erforderliche Energie mittels eines Transpondermechanismus' erfolgt.

7. Datenträger zum Speichern von ersten Informationen mit einer Zugriffssteuerung entsprechend dem Verfahren nach einem oder mehreren der voranstehenden Ansprüche, **gekennzeichnet durch** mindestens ein auf einem bewegten Funktionsteil des Datenträgers angeordnetes zweite Informationen speicherndes erstes Funktionselement.

8. Datenträger nach Anspruch 7, bei dem das erste Funktionselement als Speicher ausgelegt ist.

9. Datenträger nach Anspruch 7 oder 8, bei dem das erste Funktionselement als Prozessor ausgelegt ist.

10. Datenträger nach einem oder mehreren der Ansprüche 7 bis 9, bei dem mindestens ein an dem Datenträger angeordnetes zweites Funktionselement vorgesehen ist, wobei das erste Funktionselement die zweiter Informationen und das zweite Funktionselement, gesteuert vom ersten Funktionselement, die ersten Informationen verarbeitet.

11. Datenträger nach einem oder mehreren der Ansprüche 7 bis 10, bei dem an dem ersten und/oder zweiten Funktionselement elektrische Einrichtungen zur Übertragung von Energie und/oder Informationen zwischen dem Datenträger und einer Lese-/Schreibeinheit mittels eines Transpondermechanismus' vorgesehen sind.

12. Datenträger nach einem oder mehreren der Ansprüche 7 bis 11, bei dem das erste und/oder zweite Funktionselement mindestens eine bezüglich einer Drehachse des Datenträgers asymmetrisch angeordnete elektrische Spule aufweist, wobei die Spule zumindest partiell von einem äußeren statischen Magnetfeld durchflutet wird.

13. Datenträger nach einem oder mehreren der Ansprüche 7 bis 11, bei dem das bewegte Funktionsteil mindestens partiell von einem äußeren elektromagnetischen oder magnetischen Wechselfeld durchflutet wird.

14. Datenträger nach einem oder mehreren der Ansprüche 7 bis 13, bei dem an dem ersten und/oder zweiten Funktionselement optische Einrichtungen zur Übertragung von Energie und/oder Informationen zwischen dem Datenträger und einer Lese-/Schreibeinheit vorgesehen sind.

15. Datenträger nach Anspruch 14, bei dem die optischen Einrichtungen mindestens zwei Übertragungskanäle unterschiedlicher optischer Schwingungsfrequenz bereitstellen.

16. Datenträger nach einem oder mehreren der Ansprüche 7 bis 15, bei dem das erste und/oder zweite Funktionselement ein Chip oder Chipmodul ist.

17. Datenträger nach einem oder mehreren der Ansprüche 7 bis 16, bei dem das erste und/oder zweite Funktionselement ein EEPROM, FLASH, EPROM, oder ROM-Speicherelement ist.

18. Datenträger nach einem oder mehreren der Ansprüche 7 bis 17, bei dem das erste und/oder zweite Funktionselement eine Steuereinheit für den Zugriff und die Verwaltung der zweiten Informationen aufweist.

19. Datenträger nach einem oder mehreren der Ansprüche 7 bis 17, bei dem eine Steuereinheit für den Zugriff und die Verwaltung der zweiten Informationen in einer externen Funktionseinheit vorgesehen ist.

20. Datenträger nach einem oder mehreren der Ansprüche 7 bis 19, bei dem das erste und/oder zweite Funktionselement Mittel zur Überprüfung der Authorisierung eines Lese- und/oder Schreibzugriffs auf die zweiten Informationen aufweist.

21. Datenträger nach einem oder mehreren der Ansprüche 7 bis 20, bei dem das erste und/oder zweite Funktionselement Mittel zur Überprüfung der Authorisierung eines Lese- und/oder Schreibzugriffs auf die ersten Informationen unter Berücksichtigung der zweiten Informationen aufweist.

22. Funktionseinheit zum Lesen und/oder Beschreiben eines Datenträgers entsprechend einem oder mehreren der voranstehenden Ansprüche, **gekennzeichnet durch**
Mittel zum Lesen/Schreiben der ersten Informationen;
Mittel zum Lesen/Schreiben der zweiten Informationen; und
Prozeßmittel zum Verarbeiten der ersten Informationen unter Berücksichtigung der zweiten Informationen.

23. Funktionseinheit nach Anspruch 22, bei der elektrische Einrichtungen zur Übertragung von Energie und/oder Informationen mittels eines Transpondermechanismus' vorgesehen sind.

24. Funktionseinheit nach Anspruch 32 oder 33, die ein statisches Magnetfeld oder ein elektromagnetisches oder magnetisches Wechselfeld bereitstellt, das den in der Funktionseinheit befindlichen Datenträger zumindest partiell durchflutet.

25. Funktionseinheit nach einem oder mehreren der Ansprüche 22 bis 24, die optische Einrichtungen zur Übertragung von Energie und/oder Informationen zu dem Datenträger bereitstellt.

26. Funktionseinheit nach Anspruch 25, bei der die optischen Einrichtungen mindestens zwei Übertragungskanäle unterschiedlicher optischer Schwingungsfrequenz aufweisen.

27. Funktionseinheit nach einem oder mehreren der Ansprüche 22 bis 26, bei der eine Steuereinheit zur Steuerung des Zugriffs und der Verwaltung der zweiten Informationen vorgesehen ist.

28. Funktionseinheit nach einem oder mehreren der Ansprüche 22 bis 27, die Mittel zur Überprüfung der Authorisierung eines Lese- und/oder Schreibzugriffs auf die zweiten Informationen bereitstellt.

29. Funktionseinheit nach einem oder mehreren der Ansprüche 22 bis 28, die Mittel zur Überprüfung der Authorisierung eines Lese- und/oder Schreibzugriffs auf die ersten Informationen unter Berücksichtigung der zweiten Informationen aufweist.
